# EUROPEAN PATENT APPLICATION

(11) **EP 4 729 657 A1**
(43) Date of publication of application: **22.04.2026**
(21) Application number: 25208769.7
(22) Date of filing: 15.10.2025
(51) Int. Cl.: C25B 1/04, C25B 15/02, C25B 15/023

(54) **METHOD AND APPARATUS FOR GENERATING HYDROGEN BY A PEM CELL AND WATER ELECTROLYSIS**

(30) Priority: 17.10.2024 IT 202400023184
(71) Applicant: MicroPROGEL S.R.L., 35038 Torreglia (PD) (IT)
(72) Inventor: GAFFO, Valter, 35038 Torreglia (PD) (IT)
(74) Representative: Citron, Massimiliano

(57) **Abstract**

A method is described for generating hydrogen by means of a PEM cell and water electrolysis, wherein leads of a photovoltaic solar panel, through which the panel supplies an electrical voltage and current towards its outside, are electrically connected by electrical conductors to electrical supply terminals of a PEM electrolytic cell which is external to the panel and designed to operate directly with the electrical voltage and current as generated at the leads.

## Description

The invention relates to a method and apparatus for generating hydrogen via a PEM cell and water electrolysis.

Conventional systems for hydrogen production through solar-powered electrolysis typically employ DC/DC power converters between the solar panels and the electrolytic cells. However, these converters introduce efficiency losses (all of the panel's power passes through the converter) and increase the complexity and cost of the system. The sectors of the solar panel and the electrolytic cell are too far apart, technologically and commercially, to achieve optimized or synergistic solutions.

Other solutions in the literature prefer to optimize solar energy production and water electrolysis through highly specialized and integrated components, which however are complex, of questionable or difficult practical implementation, very expensive and difficult to repair after a failure.

Improving this state of the art is the main object of the invention, which is defined in the appended claims, where the dependent claims define advantageous variants.

Another object is to obtain an improved method and apparatus for producing hydrogen and oxygen generated by a PEM cell.

Another object is to obtain a method and apparatus for producing hydrogen and oxygen generated by a PEM cell using solar energy.

A hydrogen generator based on a PEM cell uses polymer membranes and operates according to the following electrochemical principle:
1. Water is introduced into the PEM cell;
2. Inside the cell, water undergoes a process of electrolysis, separating itself into pure hydrogen (H₂) and oxygen (O₂);
3. This separation occurs through an internal polymeric membrane, permeable only to H⁺ ions (protons);
4. The overall chemical reaction can be represented as:

   2H₂O → 2H₂ + O₂;
5. The polymer membrane acts as a solid electrolyte, facilitating the transport of protons and effectively separating the hydrogen from the oxygen thus produced.

This electrochemical process allows the production of high-purity hydrogen, making PEM cells particularly suitable for applications requiring high-quality hydrogen.

One aspect of the invention is a method for generating hydrogen via a PEM cell and electrolysis of water,
wherein the leads of a photovoltaic solar panel, through which the panel supplies an electrical voltage and current to the outside,
are electrically connected via electrical conductors to the electrical power-supply terminals of a PEM electrolytic cell which is
   external to the panel and
   designed to operate directly with the electrical voltage and current as generated at the leads.

Another aspect of the invention is an apparatus capable of carrying out the method, comprising:
- a photovoltaic solar panel equipped with leads through which the panel supplies an electrical voltage and current to the outside;
- a PEM electrolytic cell that
   is external to the panel (the panel has an external surface and the PEM cell is distant from this external surface) and
   configured to operate directly with the voltage and current generated at the panel leads;
- a layout of electrical conductors (e.g. a wiring harness) connected between the leads and electrical supply terminals of the PEM cell to electrically supply the PEM cell from the panel leads.

The method and apparatus according to the invention eliminate the need for a DC/DC power converter by directly connecting a solar panel to standard PEM cells. This elimination reduces conversion losses and increases the overall efficiency of the device.

The proposed method and apparatus utilize commercially available components optimized for cost and performance, ensuring a highly efficient power generation system. Eliminating the DC/DC power converter also allows for the use of a reduced number of standard components, resulting in cost savings, reliability, and design simplicity.

As a result, not only is greater energy efficiency achieved, but the reduced costs make the production of "green" hydrogen more accessible and easily implementable at different production scales.

The electrical sizing of the solar panel and PEM cell allows for optimal operation without the need for complex energy management strategies or DC/DC conversion. The sizing takes into account, for example, that the solar panel typically supplies 30-40 V and 10-15 A at the leads; while the supply voltage for a single *layer* of the PEM cell varies from 1.8 V to 2.5 V.

To design the system it is sufficient to take into account the known facts that
- a solar panel actually behaves like a current generator (called Iₚₐₙ here),
- a PEM cell works and produces as a function of the input power, in particular the input current, and
- one cannot send more power to the PEM cell than it can handle (otherwise the PEM cell will be damaged).

The nameplate data of a PEM cell specify a maximum power, so it is sufficient to connect solar panels, even commercial ones, to the PEM cell, as long as the maximum power generated by the panels (value given by their manufacturer) does not exceed that which the PEM cell can handle.

From the above, it follows that the panels adapt "electrically" to the PEM cell. When the PEM cell is electrically powered at the inputs, it develops a working voltage V_{cell} across the inputs, which becomes the working voltage of the solar panels that are powering the PEM cell with a current Iₚₐₙₙ. Clearly, Iₚₐₙₙ varies based on the solar radiation on the panels.

The power generated by the panels, and that absorbed by the PEM cell, is V_{cell} *Iₚₐₙ.

The voltage V_{cell} remains almost stable during operation of the PEM cell and depends on the internal structure of the PEM cell.

If the nominal operating voltage of the panels is less than V_{cell}, it is sufficient to put panels in series to reach the V _{cell} value across the ends of the series.

To guarantee the PEM cell the nominal power supply, it is sufficient to put a sufficient number of panels in parallel, or put a sufficient number of series of panels in parallel, to generate an adequate Iₚₐₙ (given by the sum of the currents supplied by all the panels in parallel).

Advantageously, the apparatus can be easily scaled by modifying the solar panel configuration and the number of PEM cells used. In fact, the apparatus may comprise an array of photovoltaic solar panels, configured in series and/or parallel, to provide a nominal power-supply voltage and current for the PEM cell.

Finally, the apparatus and method promote the production of hydrogen using exclusively renewable solar energy.

Preferred applications of the apparatus and method are:
- hydrogen filling stations;
- energy storage systems for residential and commercial buildings;
- industrial plants for the production of "green" hydrogen on a small and medium scale;
- energy backup solutions for infrastructure.

In a preferred variant of the method
the PEM cell is controlled by an electronic circuit, and/or
the electronic circuit is electrically powered from the leads of the panel, specifically by converting electrical energy from the panel leads to generate a dedicated DC supply voltage for the electronic circuit.

A problem with any PEM cell is that its membrane ruptures if the PEM cell continues to be powered without water. In this case, the membrane dries out and deteriorates beyond repair. Water shortage can occur, for example, due to a failure of the water supply system (e.g., the water circulation pump) or due to the depletion of the water reserve in the tank supplying the PEM cell.

To solve the problem, in a preferred variant of the method the electrical continuity between the panel leads and the PEM cell is interrupted when
the PEM cell is no longer supplied with water, or
the water supply is abnormal, or
the water supply system is faulty.

In particular, said electrical continuity is interrupted when
malfunction of a water supply pump is detected, and/or
it is detected that the water level in the tank has dropped below a threshold value.

For the same reason, electrical continuity between the panel leads and the PEM cell is interrupted when the electrical power generated by the panel towards the PEM cell is below or above a threshold value. This is very useful for safety reasons, since the protection inherent in the aforementioned DC/DC power converter, which is eliminated, is no longer available.

In a preferred variant, the apparatus comprises:
an electronic circuit for controlling the PEM cell, wherein
the electronic circuit is connected to the panel leads to receive a DC power supply voltage (e.g. 24 V). This makes the apparatus energy-independent and autonomous.

In particular, the electronic circuit is connected to the panel leads via a DC/DC converter configured to generate a DC supply voltage for the electronic circuit (e.g. 24 V).

This has the advantage that the apparatus can be switched off automatically in the absence of solar radiation.

In particular, the electronic circuit is configured to monitor and regulate operating parameters of the PEM cell, including, for example:
the pressure of the hydrogen produced; and/or
the conductivity of the electrolyte in the PEM cell; and/or
electrical voltages and currents of the apparatus.

In a preferred variant the apparatus comprises:
- a hydraulic circuit to supply the PEM cell with water,
- a sensor to detect the operation of the hydraulic circuit,
- electrical interruption means to interrupt the electrical continuity between the panel leads and the PEM cell,
the electronic circuit being configured to drive said means to disconnect the PEM cell from the panel leads when it receives a predefined signal from the sensor (indicating a malfunction of the hydraulic circuit).

In a more preferred variant the apparatus comprises:
- a water tank,
- a circuit to feed the PEM cell with water taken from the tank, and
- a pump to circulate water in the circuit;
the electronic circuit being connected to the pump to control its operation, e.g. the regime.

In a preferred variant the apparatus comprises electrical interruption means for interrupting the electrical continuity between the panel apparatus and the PEM cell.

In particular, the means of electrical interruption comprise or consist of a switch, e.g. electromechanical, such as a relay, or electronic, such as a semiconductor device (e.g. MOSFET or IGBT).

Although the electrical disconnection means can be manually activated, it is preferable to automate this function. In this case, the electrical disconnection means are connected to and controlled by the electronic circuit, and the electronic circuit is configured to drive the electrical disconnection means to disconnect the panel from the PEM cell.

In particular, the device comprises a sensor to detect
malfunction of a water supply pump, and/or
the depletion of a water tank; and
the electronic circuit is configured to drive the electrical interruption means when it receives the predefined signal from the sensor.

The advantages of the invention will be made even more evident by the following description of a preferred embodiment of the apparatus, which refers to the attached drawing in which:

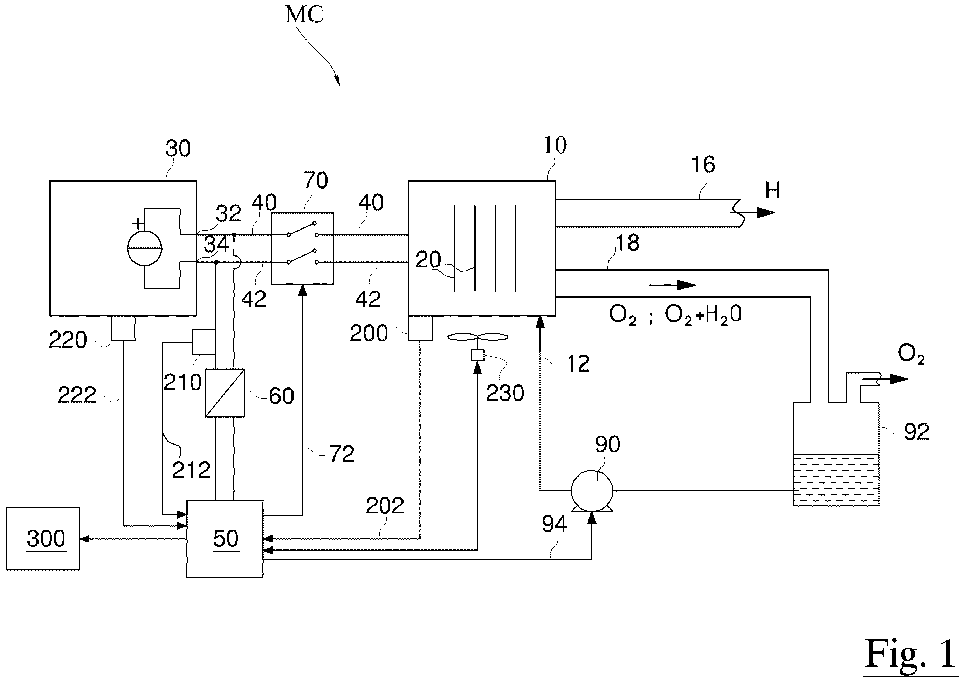

- Fig. 1 shows a diagram of the apparatus.

A system MC essentially comprises a solar panel 30 and a PEM cell 10 external to and remote from the solar panel 30. For example, the solar panel 30 is installed on the roof or lawn of a building, and the PEM cell 10 is in a room of the building.

The PEM cell 10 is equipped with an inlet conduit 12 for the water supply, an outlet conduit 16 for the transport of the generated hydrogen (H₂), and an outlet conduit 18 for the transport of the generated oxygen (O₂).

The PEM cell 10 is supplied with water, through the conduit 12, by a pump 90 which draws water from a tank 92.

Inside the PEM cell 10 are one or more known proton exchange membranes 20 that perform water electrolysis when electrically powered. For this purpose, the PEM cell 10 comprises terminals 22, 24 to electrically power the membranes 20.

The solar panel 30 can generate in a known manner an electrical voltage (illustrated schematically with the symbol of a voltage generator) which is available externally at leads 32, 34 of the solar panel 30. The leads 32, 34 are respectively connected via electrical conductors 40, 42 (e.g. cables) to the terminals 22, 24 of the PEM cell 10.

When the solar panel 30 delivers electrical power to the PEM cell 10, the membrane 20 causes the electrolytic dissociation of water molecules, producing oxygen (O₂) and hydrogen (H₂).

An electronic circuit 50 (e.g., a microcontroller or a PCB) is responsible for the operational control of the PEM cell 10.

In particular, the electronic circuit 50 controls the operation of the pump 90 via a signal line 94, e.g. a cable.

The electronic circuit 50 is preferably configured and/or programmed to:
- monitor the operating parameters of the cell 10, e.g. checking the pressure of the hydrogen generated, the temperature of cell 10 itself, the conductivity of the electrolyte in the cell 10, the voltages and currents inside the cell 10, and the water flow, in order to detect any anomalies. For this purpose, the apparatus MC is equipped with corresponding sensors; and/or
- manage the water supply, e.g. by controlling the operation of the pump 90 and/or the water level in the tank 92 to ensure a continuous and correct supply of the PEM cell 10; and/or
- prevent overheating of the cell 10 by monitoring the temperature of the PEM cell 10 via a related temperature sensor 200. In particular, the electronic circuit 50 acquires the signal coming from the sensor 200 via a line 202, processes it to extract a temperature value of the cell 10 and, if this value exceeds a threshold, e.g. activates a cooling system 230 of the cell 10 (e.g. a fan) or reduces the electrical power input to the cell 10 to prevent overheating; and/or
- provide diagnostic information and/or communicate the status of the apparatus MC to facilitate maintenance and quickly identify any problems, e.g. via a display 300.

If some functions are not implemented, the apparatus MC can do without the related components.

Preferably, the electronic circuit 50 is electrically powered with electrical power generated by the solar panel 30. In particular, for this purpose a DC/DC converter 60 has its input connected to the leads 32, 34 and its output to the power supply terminals of the electronic circuit 50. For example, the DC/DC converter 60 supplies a regulated 24 V output.

Preferably the apparatus MC comprises electrical cut-off means 70 for electrically isolating the PEM cell 10 from the solar panel 30. The means 70 prevent destruction of the membrane 20 in the event of a failure if the PEM cell 10 continues to be electrically powered despite the water supply being interrupted.

The means 70 may be activated manually, but preferably the apparatus MC controls them automatically. In particular, the means 70 are controlled by the electronic circuit 50 via a signal line 72, e.g. a cable.

In particular, the electronic circuit 50 is configured and/or programmed to activate the means 70, causing the panel 30 to be detached from the cell 10 to protect it, if it detects
- a malfunction of the pump 90, or
- anomalies in the hydraulic circuit of the pump 90, or
- the absence of water supply; or
- insufficient solar radiation conditions. In this case, the panel 30 is unable to supply adequate electrical energy to the cell 10 and stable operation of the cell 10 would not be guaranteed. For this purpose, the circuit 50 can, for example, monitor the voltage at the leads 32, 34 with a sensor 210 or be interfaced with a luminosity sensor 220 via respective lines 212, 222; or
- anomalies in the operating parameters of the cell 10, e.g. in the presence of anomalous values of pressure, temperature of the cell 10, conductivity of its electrolyte, or electrical voltages and currents in the cell 10.

Preferably, the conduit 18 ends inside the tank 92, to recover the water emitted by the cell 10. From the tank 92 the oxygen produced is removed, for example, by dispersing it into the atmosphere or recovering it in cylinders.

## Claims

1. Method for generating hydrogen by means of a PEM cell and water electrolysis,
wherein leads of a photovoltaic solar panel, through which the panel supplies an electrical voltage and current towards its outside,
are electrically connected by electrical conductors to electrical supply terminals of a PEM electrolytic cell which is
external to the panel and
designed to operate directly with the electrical voltage and current as generated at the leads.

2. Method according to claim 1, wherein
the PEM cell is controlled by an electronic circuit, and
the electronic circuit is electrically powered from the leads of the panel.

3. Method according to claim 2, wherein by conversion of electrical energy from the leads of the panel a dedicated DC supply voltage for the electronic circuit is generated.

4. Method according to any preceding claim, wherein
the PEM cell is supplied with water from a water supply system, and
the electrical continuity between the leads of the panel and the PEM cell is interrupted when the PEM cell is no longer supplied with water, or the water supply is abnormal, or the water supply system is faulty.

5. Method according to any preceding claim, wherein the electrical continuity between the leads of the panel and the PEM cell is interrupted when the electrical power generated by the panel to the PEM cell is lower than a threshold value.

6. Apparatus comprising:
- a photovoltaic solar panel provided with leads through which the panel supplies an electrical voltage and current to the outside;
- a PEM electrolytic cell which
is external to the panel and
configured to operate directly with the electrical voltage and current generated at the leads of the panel;
- a layout of electrical conductors connected between the leads and electrical supply terminals of the PEM cell to electrically supply the PEM cell from the leads of the panel.

7. Apparatus according to claim 6, comprising
an electronic circuit for controlling the PEM cell, wherein
the electronic circuit is connected to the leads of the panel to receive a DC supply voltage.

8. Apparatus according to claim 6 or 7, comprising a DC/DC converter which is
installed between the leads of the panel and the electronic circuit, and
configured to generate a DC supply voltage for the electronic circuit.

9. Apparatus according to claim 7 or 8, comprising
- a hydraulic circuit for supplying the PEM cell with water,
- a sensor for detecting the operation of the hydraulic circuit,
- electrical interruption means for interrupting the electrical continuity between the leads of the panel and the PEM cell,
the electronic circuit being configured to drive said means to disconnect the PEM cell from the leads of the panel when it receives a predefined signal from the sensor.

10. Apparatus according to claim 9, wherein said means comprise or consist of a relay or an electronic semiconductor switch.
